# EUROPÄISCHE PATENTSCHRIFT

(11) **EP 3 608 520 B1**
(45) Veröffentlichungstag und Bekanntmachung des Hinweises auf die Patenterteilung: **14.04.2021**
(21) Anmeldenummer: 19184927.2
(22) Anmeldetag: 08.07.2019
(51) Int. Cl.: F01N 3/20, F01N 9/00

(54) **VERFAHREN ZUM BETREIBEN EINES FÖRDERMODULS EINES SCR-KATALYSATORSYSTEMS**
METHOD FOR OPERATING A TRANSPORT MODULE OF AN SCR CATALYTIC SYSTEM
PROCÉDÉ DE FONCTIONNEMENT D'UN MODULE DE TRANSPORT D'UN SYSTÈME DE CATALYSEUR SCR

(30) Priorität: 09.08.2018 DE 102018213382
(43) Veröffentlichungstag der Anmeldung: 12.02.2020
(73) Patentinhaber: Robert Bosch GmbH, 70442 Stuttgart (DE)
(72) Erfinder: Joshi, Rohit, 71229 Leonberg (DE)

(56) Entgegenhaltungen:
- EP-A1- 3 085 912
- DE-A1-102010 030 860
- DE-A1-102011 088 701
- DE-A1-102011 088 704
- DE-A1-102015 216 745
- DE-A1-102016 117 949
- DE-A1-102016 210 847
- DE-A1-102016 217 842

## Beschreibung

Die vorliegende Erfindung betrifft ein Verfahren zum Betreiben eines Fördermoduls eines SCR-Katalysatorsystems. Des Weiteren betrifft die vorliegende Erfindung ein Computerprogramm, das jeden Schritt des Verfahrens ausführt, sowie ein maschinenlesbares Speichermedium, welches das Computerprogramm speichert. Schließlich betrifft die Erfindung ein elektronisches Steuergerät, welches eingerichtet ist, um das Verfahren auszuführen.

### Stand der Technik

Um Stickoxide im Abgas von Verbrennungsmotoren, insbesondere von Dieselmotoren zu verringern, ist es bekannt, in deren Abgasbereich einen SCR-Katalysator (Selective Catalytic Reduction) anzuordnen. Dieser reduziert die Stickoxide in Gegenwart eines Reduktionsmittels zu Stickstoff. Als Reduktionsmittel wird Ammoniak verwendet. Um dieses in den SCR-Katalysator einzubringen, wird in der Regel eine wässrige Harnstofflösung (Harnstoffwasserlösung; HWL) stromaufwärts des SCR-Katalysators in den Abgasstrang eingespritzt, damit diese Ammoniak abspaltet. Eine 32,5-prozentige HWL ist unter dem Markennamen AdBlue® kommerziell erhältlich. Diese weist einen Gefrierpunkt von -11,5°C auf. Bei niedrigen Umgebungstemperaturen muss das Fördermodul eines SCR-Katalysatorsystems, welches die HWL aus einem Tank zu einem Dosierventil fördert, aufgetaut werden, bevor es zum Fördern der HWL eingesetzt werden kann. Hierzu wird es in einem Auftauzustand betrieben, dessen Dauer in Abhängigkeit von der Umgebungstemperatur gewählt wird Aus dem Stand der Technik sind folgende Publikationen bekannt, die Verfahren zum Betreiben von Dosiersystemen für Verbrennungsmotoren offenbaren: DE 10 2016 117949 A1, DE 10 2011 088701 A1, DE 10 2015 216745 A1, DE 10 2011 088704 A1, DE 10 2016 217842 A1, DE 10 2010 030860 A1, DE 10 2016 210847 A1 and EP 3 085 912 A1.

### Offenbarung der Erfindung

Das Verfahren dient zum Betreiben eines Fördermoduls eines SCR-Katalysatorsystems, welches eine Förderpumpe, eine Rückförderpumpe und eine hydraulische Übergabe aufweist. Die Förderpumpe dient dem Fördern von HWL aus einem Tank zu einem Dosierventil. Die Rückförderpumpe ermöglicht vor Abschalten des Fördermoduls ein Rückfördern von HWL aus dem Dosierventil und aus dem hydraulischen System des Fördermoduls, um bei niedrigen Umgebungstemperaturen eine Beschädigung aufgrund von Eisdruck zu verhindern. Bei der hydraulischen Übergabe handelt es sich um ein Bauteil, welches die Übergabe der HWL vom Fördermodul an das Dosierventil ermöglicht. Diese wird auch als "Hydraulic interface channel" bezeichnet.

In dem Verfahren wird das Fördermodul in einem Testzustand betrieben, in dem ein Förderbetrieb der Förderpumpe jedoch kein Förderbetrieb der Rückförderpumpe erfolgt. In dem Testzustand wird ein zeitlicher Verlauf eines MSP-Stroms (Magnet Stop Point) der Förderpumpe gemessen und aufgrund dieses zeitlichen Verlaufs entschieden, ob das Fördermodul in einen Auftauzustand wechseln soll. Bei dem MSP-Strom handelt es sich um ein lokales Maximum im Pumpenstromverlauf der Förderpumpe, welches durch einen Anschlag ihres Aktuators verursacht wird. Pro Pumpenhub tritt also ein MSP auf und aus den Zeitpunkten und elektrischen Stromstärken der MSPs ergibt sich der MSP-Strom.

Der zeitliche Verlauf des MSP-Stroms wird durch gefrorene HWL im Arbeitsraum der Förderpumpe, im Arbeitsraum der Rückförderpumpe und im hydraulischen System des Fördermoduls beeinflusst. Das Verfahren ermöglich deshalb eine genaue Aussage darüber, ob ein eventuell erneuter Wechsel des Fördermoduls in einen Auftauzustand erforderlich ist oder ob es in einen regulären Betriebszustand wechseln kann, in dem HWL in den Abgasstrang stromaufwärts eines SCR-Katalysators eindosiert werden kann. Während bekannte Verfahren, welche die voraussichtliche Auftauzeit aufgrund der Umgebungstemperatur abschätzen, einen Sicherheitsspielraum vorsehen müssen, um sicherzustellen, dass sich keine gefrorene HWL mehr im System befindet, ermöglicht es die genaue Analyse des Fördermoduls mithilfe des vorliegenden Verfahrens, den SCR-Katalysator früher in Betrieb zu nehmen.

In einer Ausführungsform des Verfahrens ist vorgesehen, dass das Fördermodul in einem Testzustand startet, um zu überprüfen, ob dieses sofort zum Eindosieren von HWL zur Verfügung steht oder ob es zunächst in einem Auftauzustand betrieben werden muss. Dieser Testzustand weist eine erste Testphase und eine zweite Testphase auf. In der ersten Testphase ist die Rückförderpumpe geöffnet, so dass HWL durch diese hindurchströmen kann. In der zweiten Testphase ist die Rückförderpumpe geschlossen, so dass sie ein Zurückfließen von HWL durch eine Rückförderleitung des Fördermoduls in den Tank verhindert. Bei der Entscheidung, ob das Fördermodul in den Auftauzustand wechseln soll, wird sowohl ein zeitlicher Verlauf des MSP-Stroms in der ersten Testphase als auch ein zeitlicher Verlauf des MSP-Stroms in der zweiten Testphase berücksichtigt.

Aus dem Verlauf des MSP-Stroms in der ersten Testphase können insbesondere die folgenden Rückschlüsse gezogen werden:
a. Wenn zumindest ein erwarteter Messwert des MSP-Stroms nicht detektiert werden kann oder wenn zumindest ein Messwert des MSP-Stroms sich mindestens um einen ersten Schwellenwert vom ersten Messwert des zeitlichen Verlaufs des MSP-Stroms unterscheidet, dann ist zumindest eines der folgenden Elemente des Fördermoduls durch gefrorene HWL blockiert: der Arbeitsraum der Förderpumpe, die Verbindung der Förderpumpe mit dem Tank, der Arbeitsraum der Rückförderpumpe, die Verbindung der Rückförderpumpe mit dem Tank oder die hydraulische Verbindung zwischen der Förderpumpe und der Rückförderpumpe. Derselbe Schluss kann auch dann gezogen werden, wenn zumindest ein Messwert des MSP-Stroms einen vorgegebenen Maximalwert überschreitet.
b. Wenn hingegen keine dieser Bedingungen erfüllt ist aber ein zeitlicher Anstieg des MSP-Stroms einen zweiten Schwellenwert überschreitet, dann kann gefolgert werden, dass zwar der Arbeitsraum der Förderpumpe und deren Verbindung zum Tank frei sind, jedoch zumindest eines der folgenden Elemente des Fördermoduls durch gefrorene HWL blockiert ist: der Arbeitsraum der Rückförderpumpe, die Verbindung der Rückförderpumpe mit dem Tank oder die hydraulische Verbindung zwischen der Förderpumpe und der Rückförderpumpe.
c. Überschreitet der zeitliche Anstieg des MSP-Stroms den zweiten Schwellenwert nicht, es kann jedoch beispielsweise mittels einer Softwarefunktion keine Flüssigkeit im Arbeitsraum der Förderpumpe detektiert werden, so kann darauf geschlossen werden, dass der Arbeitsraum der Förderpumpe zwar frei ist, jedoch zumindest eines der folgenden Elemente des Fördermoduls durch gefrorene HWL blockiert ist: die Verbindung der Förderpumpe mit dem Tank, der Arbeitsraum der Rückförderpumpe, die Verbindung der Rückförderpumpe mit dem Tank oder die hydraulische Verbindung zwischen der Förderpumpe und der Rückförderpumpe.

Wenn aus dem MSP-Strom in der ersten Testphase geschlossen wurde, dass zumindest ein Element des Fördermoduls blockiert ist, so wird entschieden, dass das Fördermodul in den Auftauzustand wechseln soll.

Wurde nicht bereits in der ersten Testphase entschieden, dass das Fördermodul in den Auftauzustand wechseln soll, so wird auch der MSP-Strom in der zweiten Testphase analysiert. Insbesondere dann, wenn in der zweiten Testphase ein zeitlicher Anstieg des MSP-Stroms einen zweiten Schwellenwert überschreitet, kann gefolgert werden, dass zwar die Arbeitsräume der Förderpumpe und der Rückförderpumpe sowie die Verbindung der Förderpumpe mit dem Tank, die Verbindung der Rückförderpumpe mit dem Tank und die hydraulische Verbindung zwischen der Förderpumpe und der Rückförderpumpe frei sind, jedoch die hydraulische Übergabe durch gefrorene HWL blockiert ist. In diesem Fall wird entschieden, dass das Fördermodul in den Auftauzustand wechseln soll. Diese Entscheidung wird auch dann getroffen, wenn eine der unter Punkt a. genannten Bedingungen in der zweiten Testphase erfüllt sein sollte. Anderenfalls ist es bereit für den Dosierbetrieb.

In einem Auftauzustand des Fördermoduls werden üblicherweise die Aktuatoren der Förderpumpe und der Rückförderpumpe mit einem Strom bestromt, der nicht ausreicht, um einen Förderhub auszulösen, sondern lediglich dem Aufheizen der Aktuatoren dient. Dieser Auftauzustand muss gelegentlich durch Entlüftungsphasen unterbrochen werden, in denen die Förderpumpe in einen Förderbetrieb wechselt und die Rückförderpumpe ohne zu fördern geöffnet wird. Auf diese Weise können durch das Aufheizen im hydraulischen System entstehende Luftblasen aus diesem ausgetrieben werden. In einer Ausführungsform des Verfahrens kann eine solche Entlüftungsphase gleichzeitig als Testzustand genutzt werden, um zu entscheiden, ob es erforderlich ist, aus der Entlüftungsphase in den Auftauzustand zurückzukehren oder ob das Fördermodul inzwischen dosierbereit ist. Wenn innerhalb eines vorgegebenen Zeitintervalls zumindest eine vorgegebene Anzahl erwarteter Messwerte des MSP-Stroms nicht detektiert werden kann oder wenn zumindest ein Messwert des MSP-Stroms sich mindestens um einen ersten Schwellenwert vom Messwert im zeitlichen Verlauf des MSP-Stroms unterscheidet oder wenn zumindest ein Messwert des MSP-Stroms einen vorgegebenen Maximalwert überschreitet oder wenn ein zeitlicher Anstieg des MSP-Stroms einen zweiten Schwellenwert überschreitet oder er den zweiten Schwellenwert zwar nicht überschreitet aber im Arbeitsraum der Förderpumpe keine Flüssigkeit detektiert werden kann, dann ist ein erneuter Wechsel in den Auftauzustand erforderlich. Falls jedoch keine dieser Bedingungen erfüllt ist, so kann als Nächstes insbesondere vorgesehen sein, dass das Fördermodul in die oben beschriebene zweite Testphase wechselt, um eine Blockade der hydraulischen Übergabe auszuschließen, bevor es für den Dosierbetrieb freigegeben wird.

Insbesondere dann, wenn in der zweiten Testphase eine Blockade der hydraulischen Übergabe erkannt wurde und deshalb ein Wechsel in den Auftaubetrieb erfolgen soll, kann dieser Auftaubetrieb in Form einer Aufheizunterstützungsphase für die hydraulische Übergabe erfolgen. In dieser Aufheizunterstützungsphase erfolgen gleichzeitig ein Heizbetrieb und ein Förderbetrieb der Förderpumpe. Die Rückförderpumpe ist dabei geöffnet. An diese Aufheizunterstützungsphase schließt sich insbesondere eine Druckaufbauphase an, in der die Rückförderpumpe geschlossen wird. Aufgeheizte HWL wird nun unter Druck in die hydraulische Übergabe gepresst, um dort vorhandene gefrorene HWL aufzuheizen. Eine solche Druckaufbauphase kann ebenfalls als Testzustand genutzt werden. Wenn innerhalb der Druckaufbauphase innerhalb eines vorgegebenen Zeitintervalls zumindest eine vorgegebene Anzahl erwarteter Messwerte des MSP-Stroms nicht detektiert werden kann oder zumindest ein Messwert des MSP-Stroms sich zumindest um einen ersten Schwellenwert vom Messwert im zeitlichen Verlauf des MSP-Stroms unterscheidet oder zumindest ein Messwert des MSP-Stroms einen vorgegebenen Maximalwert überschreitet oder ein zeitlicher Anstieg des MSP-Stroms einen zweiten Schwellenwert überschreitet dann kann gefolgert werden, dass sich noch gefrorene HWL in der hydraulische Übergabe befindet, was einen erneuten Wechsel in den Auftauzustand, insbesondere in Form einer Aufheizungsunterstützungsphase erforderlich macht. Anderenfalls ist das Fördermodul nun dosierbereit.

Das Computerprogramm ist eingerichtet, jeden Schritt des Verfahrens durchzuführen, insbesondere wenn es auf einem Rechengerät oder elektronischen Steuergerät abläuft. Es ermöglicht die Implementierung unterschiedlicher Ausführungsformen des Verfahrens auf einem elektronischen Steuergerät, ohne hieran bauliche Veränderungen vornehmen zu müssen. Hierzu ist es auf dem maschinenlesbaren Speichermedium gespeichert. Durch Aufspielen des Computerprogramms auf ein herkömmliches elektronisches Steuergerät wird ein elektronisches Steuergerät erhalten, welches eingerichtet ist, um ein Fördermodul eines SCR-Katalysatorsystems mittels des Verfahrens zu betreiben.

### Kurze Beschreibung der Zeichnungen

Ausführungsbeispiele der Erfindung sind in den Zeichnungen dargestellt und werden in der nachfolgenden Beschreibung näher erläutert.
- Fig. 1: zeigt schematisch ein Fördermodul, welches mittels Ausführungsformen des erfindungsgemäßen Verfahrens betrieben werden kann.

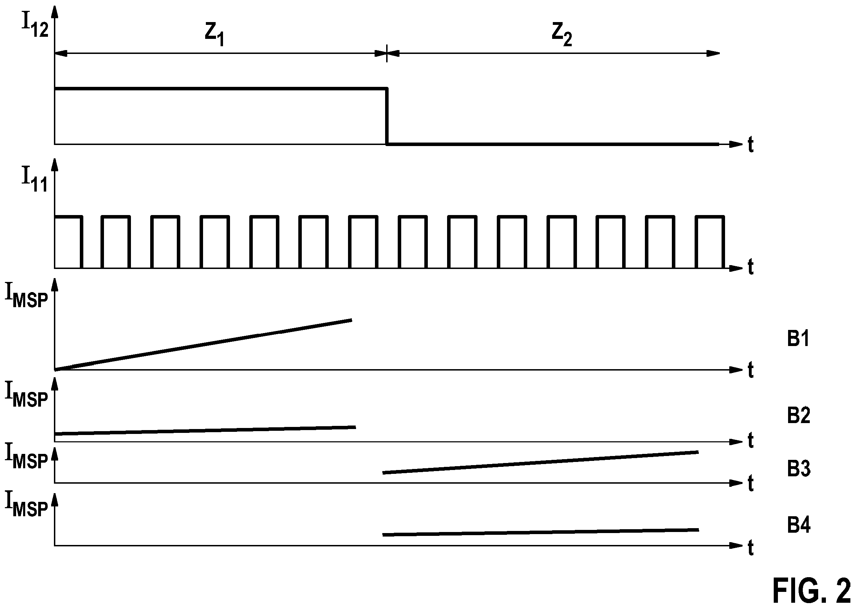

- Fig. 2: zeigt in mehreren Diagrammen zeitliche Stromverläufe in einem Ausführungsbeispiel des erfindungsgemäßen Verfahrens.
- Fig. 3: zeigt in Diagrammen zeitliche Stromverläufe in einem anderen Ausführungsbeispiel des erfindungsgemäßen Verfahrens.
- Fig. 4: zeigt in Diagrammen zeitliche Stromverläufe in noch einem anderen Ausführungsbeispiel des erfindungsgemäßen Verfahrens.
- Fig. 5: zeigt schematisch eine hydraulische Übergabe eines Fördermoduls, welche durch gefrorene HWL blockiert ist.

### Ausführungsbeispiele der Erfindung

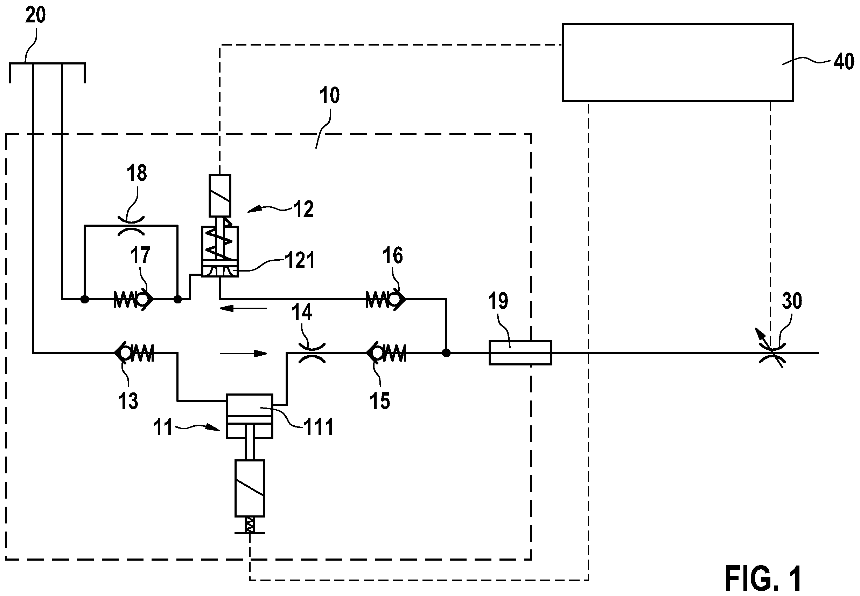

Ein in Fig. 1 dargestelltes Fördermodul 10 dient dazu, HWL aus einem Tank 20 zu einem Dosierventil 30 zu fördern. Es wird von einem elektronischen Steuergerät 40 gesteuert. In dem Fördermodul 10 sind eine Förderpumpe 11 und eine Rückförderpumpe 12 angeordnet. Die beiden Pumpen 11, 12 sind jeweils als Hubkolbenmembranpumpen ausgeführt. Eine Förderleitung führt ausgehend vom Tank 20 durch ein erstes Rückschlagventil 13 in einen Arbeitsraum 111 der Förderpumpe 11. Von dort führt sie weiter durch eine erste Drossel 14 und ein zweites Rückschlagventil 15 zu einem Verzweigungspunkt, über welchen sie mit einer Rückförderleitung verbunden ist. Die Rückförderleitung führt durch ein drittes Rückschlagventil 16 in einen Arbeitsraum 121 der Rückförderpumpe 12. Von dort führt sie durch ein viertes Rückschlagventil 17 zurück in den Tank 20. Ein Bypass, in dem eine zweite Drossel 18 angeordnet ist, umgeht das vierte Rückschlagventil 17. Jenseits des Verzweigungspunktes führt die Förderleitung durch eine hydraulische Übergabe 19 zum Dosierventil 30.

Wird das Fördermodul 10 in Betrieb genommen, so startet es in einem Ausführungsbeispiel des Verfahrens in einer ersten Testphase Z₁. In dieser wird die Rückförderpumpe 12 mittels eines Rückförderpumpenstroms I₁₂ so bestromt, dass ihr Arbeitsraum 121 offensteht und das Durchströmen von HWL ermöglicht. Die Förderpumpe 11 wird mittels eines Förderpumpenstroms I₁₁ so bestromt, dass sie Förderhübe ausführt. In der ersten Testphase Z₁ wird ein MSP-Strom I_{MSP} der Förderpumpe 11 ausgelesen.

In einem ersten Beispiel B1 steigt der MSP-Strom I_{MSP} mit jedem Förderhub der Förderpumpe 11 an. Hieraus wird darauf geschlossen, dass die hydraulische Verbindung vom Tank 20 durch die Förderpumpe 11, die Rückförderpumpe 12 und zurück in den Tank 20 nicht eisfrei ist und das elektronische Steuergerät 40 veranlasst einen Wechsel des Fördermoduls 10 in einen Auftauzustand. In einem Beispiel B2 bleibt der MSP-Strom I_{MSP} jedoch im Wesentlichen konstant, was bedeutet, dass sein Anstieg unterhalb eines vorgegebenen Schwellenwertes liegt. Das Fördermodul 10 wechselt nun in eine zweite Testphase Z₂, indem die Bestromung der Rückförderpumpe 12 abgebrochen wird, so dass ihr Arbeitsraum 121 sich schließt. Die Bestromung der Förderpumpe 11 wird hingegen in derselben Weise wie in der ersten Testphase Z₁ fortgesetzt. In einem Beispiel B3 tritt in der zweiten Testphase Z₂ ein Anstieg des MSP-Stroms I_{MSP} auf. Hieraus wird darauf geschlossen, dass die hydraulische Übergabe 19 eingefroren ist und das elektronische Steuergerät 40 leitet wiederum einen Auftauzustand ein. In einem Beispiel B4 bleibt der MSP-Strom I_{MSP} in der zweiten Testphase Z₂ jedoch im Wesentlichen konstant, woraufhin das Fördermodul 10 als dosierbereit erkannt wird und in einen Dosierbetrieb wechselt.

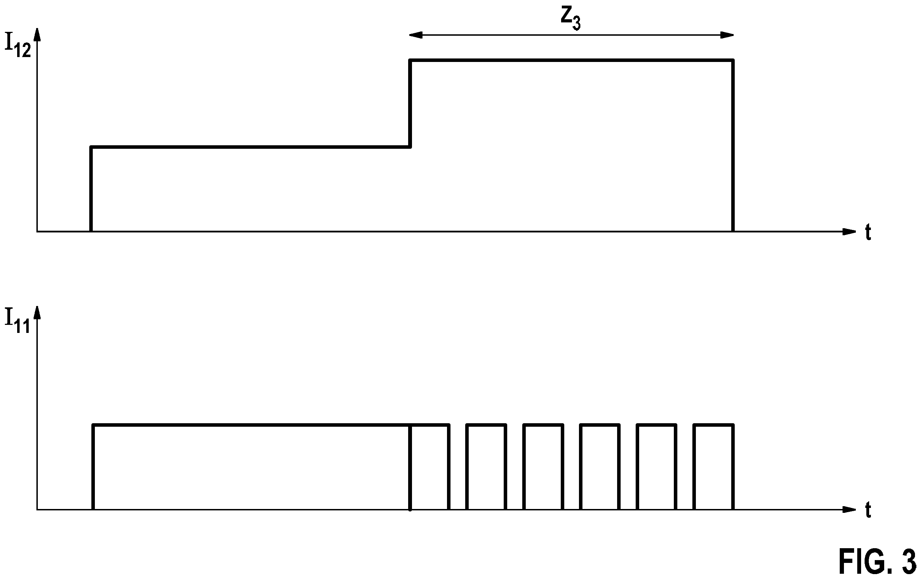

Wird bereits in der ersten Testphase Z₁ ein Auftauzustand eingeleitet, so geschieht dies in der in Fig. 3 dargestellten Weise. Zunächst werden die Förderpumpe 11 und die Rückförderpumpe 12 mit einem konstanten Förderpumpenstrom I₁₁ und einem konstanten Rückförderpumpenstrom I₁₂ bestromt, um in den Aktuatoren der Pumpen 11, 12 Wärme zu erzeugen, welche die Komponenten des Fördermoduls 10 erhitzt. Anschließend wird in einer Entlüftungsphase Z₃ der Rückförderpumpenstrom I₁₂ noch weiter erhöht, um den Arbeitsraum 121 der Rückförderpumpe 12 vollständig zu öffnen. Die Rückförderpumpe 11 wird so bestromt, dass sie Förderhübe ausübt, um das Fördermodul 10 zu entlüften. Dabei wird der MSP-Strom I_{MSP} überwacht. Steigt dieser an, so erfolgt eine Rückkehr in den Auftauzustand. Bleibt er hingegen im Wesentlichen konstant, so erfolgt ein Wechsel in die zweite Testphase Z₂.

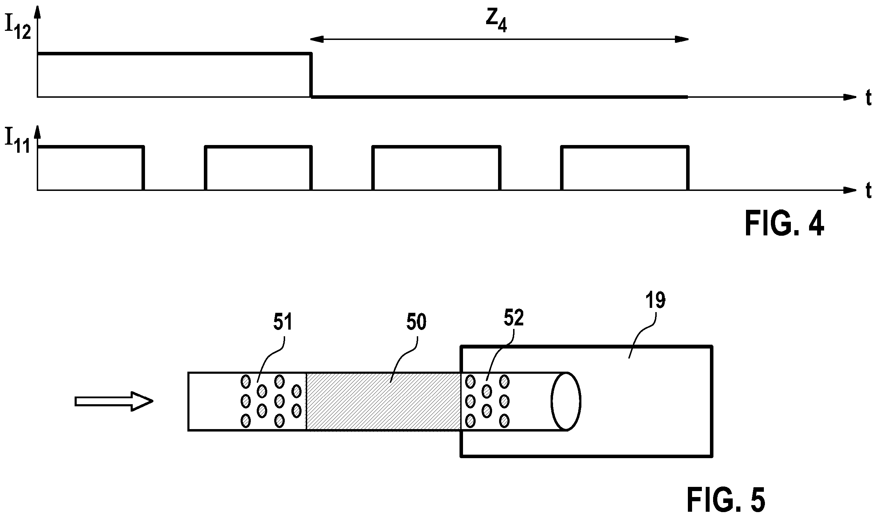

Wenn als Ergebnis der Auswertung des MSP-Stroms I_{MSP} in der zweiten Testphase Z₂ ein Wechsel in den Auftauzustand erfolgt, so wird dieser in der in Fig. 4 dargestellten Weise zunächst in Form einer Aufheizunterstützungsphase durchgeführt. Hierbei wird die Rückförderpumpe 12 konstant bestromt, so dass ihr Arbeitsraum 121 offen ist. Die Rückförderpumpe 11 führt Pumpenhübe durch. Dabei wird warme HWL generiert. Anschließend wird in einer Druckaufbauphase Z₄ die Bestromung der Rückförderpumpe 12 beendet und so der Arbeitsraum 121 der Rückförderpumpe 12 geschlossen. Die Förderpumpe 11 führt weiterhin Pumpenhübe durch. Wie in Fig. 5 dargestellt ist, wird dabei warme HWL in die hydraulische Übergabe 19 gepresst. Wenn diese durch einen gefrorenen Bereich 50 in der Förderleitung blockiert ist, welcher durch teilweise aufgetaute Bereiche 51, 52 begrenzt wird, so erfolgt ein beschleunigtes Auftauen dieses Bereiches. In der Druckaufbauphase Z₄ erfolgt wiederum eine Überwachung des MSP-Stroms I_{MSP}. Steigt dieser an, so sind die hydraulischen Übergabe 19 und ihre Zuleitung noch nicht eisfrei und es erfolgt ein erneuter Wechsel in die Aufheizunterstützungsphase, indem die Rückförderpumpe 12 wieder bestromt wird. Steigt der MSP-Strom I_{MSP} jedoch im Wesentlichen nicht mehr an, so wird erkannt, dass das Fördermodul 10 nun dosierbereit ist.

In jeder der voranstehend beschriebenen Ausführungsformen des Verfahrens erfolgt ein Wechsel in einen Auftauzustand auch dann, wenn anstelle eines Anstiegs des MSP-Stroms I_{MSP} erkannt wird, dass ein erwarteter Messwert des MSP-Stroms I_{MSP} nicht detektiert werden konnte, also einem Pumpenhub der Förderpumpe 11 kein Messwert zugeordnet werden kann oder sich zumindest ein Messwert des MSP-Stroms I_{MSP} um einen Schwellenwert vom jeweils ersten Messwert im zeitlichen Verlauf des MSP-Stroms I_{MSP} in der ersten Testphase Z₁, der zweiten Testphase Z₂, der Entlüftungsphase Z₃ oder der Druckaufbauphase Z₄ unterscheidet oder wenn zumindest ein Messwert des MSP-Stroms I_{MSP} einen vorgegebenen Maximalwert von beispielsweise 1800 mA überschreitet.

In der ersten Testphase Z₁ oder in der Entlüftungsphase Z₃ erfolgt ein Wechsel in den Auftauzustand auch dann, wenn zwar keine der vorangehend beschriebenen Bedingungen erfüllt ist und der MSP-Strom I_{MSP} auch im Wesentlichen konstant bleibt, jedoch mittels einer Softwarefunktion des elektronischen Steuergeräts 40 erkannt wird, dass sich im Arbeitsraum 111 der Förderpumpe 11 keine Flüssigkeit befindet.

Im Auftauzustand sowie in den Phasen Z₁ bis Z₄ wird vom elektronischen Steuergerät 40 eine Komponentenschutzfunktion der Förderpumpe 11 und der Rückförderpumpe 12 aktiviert, um Schäden an den Pumpen 11, 12 zu vermeiden.

## Patentansprüche

1. Verfahren zum Betreiben eines Fördermoduls (10) eines SCR-Katalysatorsystems, welches eine Förderpumpe (11), eine Rückförderpumpe (12) und eine hydraulische Übergabe (19) aufweist, **dadurch gekennzeichnet, dass** das Fördermodul (10) in einem Testzustand betrieben wird, in dem ein Förderbetrieb der Förderpumpe (11) und kein Förderbetrieb der Rückförderpumpe (12) erfolgt, wobei aufgrund eines zeitlichen Verlaufs eines MSP-Stroms (I_{MSP}) der Förderpumpe (11) in dem Testzustand entschieden wird, ob das Fördermodul (10) in einen Auftauzustand wechseln soll.

2. Verfahren nach Anspruch 1, **dadurch gekennzeichnet, dass** das Fördermodul (10) in einem Testzustand startet, in dem es in einer ersten Testphase (Z₁) und in einer zweiten Testphase (Z₂) betrieben wird, wobei die Rückförderpumpe (12) in der ersten Testphase (Z₁) geöffnet und in der zweiten Testphase (Z₂) geschlossen ist, und wobei aufgrund eines zeitlichen Verlaufs des MSP-Stroms (I_{MSP}) in der ersten Testphase (Z₁) und aufgrund eines zeitlichen Verlaufs des MSP-Stroms (I_{MSP}) in der zweiten Testphase (Z₂) entschieden wird, ob das Fördermodul (10) in den Auftauzustand wechseln soll.

3. Verfahren nach Anspruch 2, **dadurch gekennzeichnet, dass** entschieden wird, dass das Fördermodul (10) in den Auftauzustand wechseln soll, wenn in der ersten Testphase (Z₁)
- zumindest ein erwarteter Messwert des MSP-Stroms (I_{MSP}) nicht detektiert werden kann, oder
- zumindest ein Messwert des MSP-Stroms (I_{MSP}) sich mindestens um einen ersten Schwellenwert vom ersten Messwert im zeitlichen Verlauf des MSP-Stroms (I_{MSP}) unterscheidet, oder
- ein zeitlicher Anstieg des MSP-Stroms (I_{MSP}) einen zweiten Schwellenwert überschreitet, oder
- zumindest ein Messwert des MSP-Stroms (I_{MSP}) einen vorgegebenen Maximalwert überschreitet, oder
- ein zeitlicher Anstieg des MSP-Stroms (I_{MSP}) den zweiten Schwellenwert nicht überschreitet, aber keine Flüssigkeit in einem Arbeitsraum (111) der Förderpumpe (11) detektiert wird.

4. Verfahren nach Anspruch 3, **dadurch gekennzeichnet, dass** entschieden wird, dass das Fördermodul (10) in den Auftauzustand wechseln soll, wenn in der zweiten Testphase (Z₂)
- zumindest ein erwarteter Messwert des MSP-Stroms (I_{MSP}) nicht detektiert werden kann, oder
- zumindest ein Messwert des MSP-Stroms (I_{MSP}) sich mindestens um einen ersten Schwellenwert vom Messwert im zeitlichen Verlauf des MSP-Stroms (I_{MSP}) unterscheidet, oder
- zumindest ein Messwert des MSP-Stroms (I_{MSP}) einen vorgegebenen Maximalwert überschreitet, oder
- ein zeitlicher Anstieg des MSP-Stroms (I_{MSP}) einen zweiten Schwellenwert überschreitet.

5. Verfahren nach Anspruch 1, **dadurch gekennzeichnet, dass** der Testzustand eine Entlüftungsphase (Z₃) des Fördermoduls (10) ist, in der die Rückförderpumpe (12) geöffnet ist, wobei entschieden wird, dass das Fördermodul (10) in den Auftauzustand wechseln soll, wenn
- innerhalb eines vorgegebenen Zeitintervalls zumindest eine vorgegebene Anzahl erwarteter Messwerte des MSP-Stroms (I_{MSP}) nicht detektiert werden kann, oder
- zumindest ein Messwert des MSP-Stroms (I_{MSP}) sich mindestens um einen ersten Schwellenwert vom Messwert im zeitlichen Verlauf des MSP-Stroms (I_{MSP}) unterscheidet, oder
- zumindest ein Messwert des MSP-Stroms (I_{MSP}) einen vorgegebenen Maximalwert überschreitet, oder
- ein zeitlicher Anstieg des MSP-Stroms (I_{MSP}) einen zweiten Schwellenwert überschreitet, oder
- ein zeitlicher Anstieg des MSP-Stroms (I_{MSP}) einen zweiten Schwellenwert nicht überschreitet, aber keine Flüssigkeit in einem Arbeitsraum (111) der Förderpumpe (11) detektiert wird.

6. Verfahren nach Anspruch 1, **dadurch gekennzeichnet, dass** der Testzustand eine Druckaufbauphase (Z₄) des Fördermoduls (10) ist, in der die Rückförderpumpe (12) geschlossen ist, wobei entschieden wird, dass das Fördermodul (10) in den Auftauzustand wechseln soll, wenn
- innerhalb eines vorgegebenen Zeitintervalls zumindest eine vorgegebene Anzahl erwarteter Messwerte des MSP-Stroms (I_{MSP}) nicht detektiert werden kann, oder
- zumindest ein Messwert des MSP-Stroms (I_{MSP}) sich mindestens um einen ersten Schwellenwert vom Messwert im zeitlichen Verlauf des MSP-Stroms (I_{MSP}) unterscheidet, oder
- zumindest ein Messwert des MSP-Stroms (I_{MSP}) einen vorgegebenen Maximalwert überschreitet, oder
- ein zeitlicher Anstieg des MSP-Stroms (I_{MSP}) einen zweiten Schwellenwert überschreitet.

7. Verfahren nach Anspruch 6, **dadurch gekennzeichnet, dass** die Druckaufbauphase (Z₄) auf eine Aufheizunterstützungsphase für die hydraulische Übergabe (19) folgt, in der gleichzeitig ein Heizbetrieb und ein Förderbetrieb der Förderpumpe (11) erfolgt und in der die Rückförderpumpe (12) geöffnet ist.

8. Verfahren nach Anspruch 7, **dadurch gekennzeichnet, dass** die Aufheizunterstützungsphase ein Auftaubetrieb ist, in den das Fördermodul (10) gewechselt ist, nachdem in der zweiten Testphase (Z₄) gemäß Anspruch 4 entschieden wurde, dass das Fördermodul (10) in einen Auftauzustand wechseln soll.

9. Computerprogramm, welches eingerichtet ist, jeden Schritt des Verfahrens nach einem der Ansprüche 1 bis 8 durchzuführen.

10. Maschinenlesbares Speichermedium, auf welchem ein Computerprogramm nach Anspruch 9 gespeichert ist.

11. Elektronisches Steuergerät (40), welches eingerichtet ist, um mittels eines Verfahrens nach einem der Ansprüche 1 bis 8 ein Fördermodul (10) eines SCR-Katalysatorsystems zu betreiben.

## Claims

1. Method for operating a feed module (10) of an SCR catalytic converter system which has a feed pump (11), a feedback pump (12) and a hydraulic interface channel (19), **characterized in that** the feed module (10) is operated in a test state in which a feed operation of the feed pump (11) takes place and a feed operation of the feedback pump (12) does not take place, wherein on the basis of a time profile of an MSP current (I_{MSP}) of the feed pump (11) in the test state it is decided whether the feed module (10) is to change into a thawing state.

2. Method according to Claim 1, **characterized in that** the feed module (10) is started in a test state in which it is operated in a first test phase (Z₁) and in a second test phase (Z₂), wherein the feedback pump (12) is opened in the first test phase (Z₁) and closed in the second test phase (Z₂), and wherein on the basis of a time profile of the MSP current (I_{MSP}) in the first test phase (Z₁) and on the basis of a time profile of the MSP current (I_{MSP}) in the second test phase (Z₂) it is decided whether the feed module (10) is to change into the thawing state.

3. Method according to Claim 2, **characterized in that** it is decided that the feed module (10) is to change into the thawing state if, in the first test phase (Z₁),
- at least one expected measured value of the MSP current (I_{MSP}) cannot be detected, or
- at least one measured value of the MSP current (I_{MSP}) differs at least by a first threshold value from the first measured value in the time profile of the MSP current (I_{MSP}), or
- a rise in the MSP current (I_{MSP}) over time exceeds a second threshold value, or
- at least one measured value of the MSP current (I_{MSP}) exceeds a predefined maximum value, or
- a rise in the MSP current (I_{MSP}) over time does not exceed the second threshold value but fluid is not detected in a working space (111) of the feed pump (11) .

4. Method according to Claim 3, **characterized in that** it is decided that the feed module (10) is to change into the thawing state if, in the second test phase (Z₂),
- at least one expected measured value of the MSP current (I_{MSP}) cannot be detected, or
- at least one measured value of the MSP current (I_{MSP}) differs at least by a first threshold value from the measured value in the time profile of the MSP current (I_{MSP}), or
- at least one measured value of the MSP current (I_{MSP}) exceeds a predefined maximum value, or
- a rise in the MSP current (I_{MSP}) over time exceeds a second threshold value.

5. Method according to Claim 1, **characterized in that** the test state is a ventilation phase (Z₃) of the feed module (10), in which phase the feedback pump (12) is opened, wherein it is decided that the feed module (10) is to change into the thawing state if
- at least one predefined number of expected measured values of the MSP current (I_{MSP}) cannot be detected within a predefined time interval, or
- at least one measured value of the MSP current (I_{MSP}) differs at least by a first threshold value from the measured value in the time profile of the MSP current (I_{MSP}), or
- at least one measured value of the MSP current (I_{MSP}) exceeds a predefined maximum value, or
- a rise in the MSP current (I_{MSP}) over time exceeds a second threshold value, or
- a rise in the MSP current (I_{MSP}) over time does not exceed a second threshold value but fluid is not detected in a working space (111) of the feed pump (11) .

6. Method according to Claim 1, **characterized in that** the test state is a pressure build-up phase (Z₄) of the feed module (10), in which phase the feedback pump (12) is closed, wherein it is decided that the feed module (10) is to change into the thawing state if
- within a predefined time interval at least one predefined number of expected measured values of the MSP current (I_{MSP}) cannot be detected, or
- at least one measured value of the MSP current (I_{MSP}) differs at least by a first threshold value from the measured value in the time profile of the MSP current (I_{MSP}), or
- at least one measured value of the MSP current (I_{MSP}) exceeds a predefined maximum value, or
- a rise in the MSP current (I_{MSP}) over time exceeds a second threshold value.

7. Method according to Claim 6, **characterized in that** the pressure build-up phase (Z₄) follows a heating assistance phase for the hydraulic interface channel (19), in which a heating operation and a feed operation of the feed pump (11) take place at the same time and in which the feedback pump (12) is opened.

8. Method according to Claim 7, **characterized in that** the heating assistance phase is a thawing operation into which the feed module (10) is changed after it has been decided in the second test phase (Z₄) according to Claim 4 that the feed module (10) is to change into a thawing state.

9. Computer program which is configured to carry out each step of the method according to one of Claims 1 to 8.

10. Machine-readable storage medium in which a computer program according to Claim 9 is stored.

11. Electronic control device (40) which is configured to operate a feed module (10) of an SCR catalytic converter system by means of a method according to one of Claims 1 to 8.

## Revendications

1. Procédé permettant de faire fonctionner un module de débit (10) d'un système de catalyseur SCR, présentant une pompe de circulation (11), une pompe de refoulement (12) et un dispositif de transfert hydraulique (19), **caractérisé en ce que** le module de débit (10) fonctionne dans un état de test dans lequel un mode débit de la pompe de circulation (11) est effectué et aucun mode débit de la pompe de refoulement (12) n'est effectué, dans lequel, en raison d'une évolution dans le temps d'un flux MSP (I_{MSP}) de la pompe de circulation (11) à l'état de test, il est décidé si le module de débit (10) doit passer à un état de dégel.

2. Procédé selon la revendication 1, **caractérisé en ce que** le module de débit (10) démarre dans un état de test dans lequel il fonctionne dans une première phase de test (Z₁) et dans une deuxième phase de test (Z₂), la pompe de refoulement (12) étant ouverte dans la première phase de test (Z₁) et fermée dans la deuxième phase de test (Z₂), et dans lequel, en raison d'une évolution dans le temps du flux MSP (I_{MSP}) dans la première phase de test (Z₁) et en raison d'une évolution dans le temps du flux MSP (I_{MSP}) dans la deuxième phase de test (Z₂), il est décidé si le module de débit (10) doit passer à l'état de dégel.

3. Procédé selon la revendication 2, **caractérisé en ce qu'**il est décidé que le module de débit (10) doit passer à l'état de dégel si dans la première phase de test (Z₁)
- au moins une valeur de mesure attendue du flux MSP (I_{MSP}) ne peut pas être détectée, ou
- au moins une valeur de mesure du flux MSP (I_{MSP}) se distingue de la première valeur de mesure par au moins une première valeur seuil dans l'évolution dans le temps du flux MSP (I_{MSP}), ou
- une augmentation dans le temps du flux MSP (I_{MSP}) dépasse une deuxième valeur seuil, ou
- au moins une valeur de mesure du flux MSP (I_{MSP}) dépasse une valeur maximale prédéfinie, ou
- une augmentation dans le temps du flux MSP (I_{MSP}) ne dépasse pas la deuxième valeur seuil, mais aucun liquide n'est détecté dans l'espace de travail (111) de la pompe de circulation (11).

4. Procédé selon la revendication 3, **caractérisé en ce qu'**il est décidé que le module de débit (10) doit passer à l'état de dégel si dans la deuxième phase de test (Z₂)
- au moins une valeur de mesure attendue du flux MSP (I_{MSP}) ne peut pas être détectée, ou
- au moins une valeur de mesure du flux MSP (I_{MSP}) se distingue de la valeur de mesure par au moins une première valeur seuil dans l'évolution dans le temps du flux MSP (I_{MSP}), ou
- au moins une valeur de mesure du flux MSP (I_{MSP}) dépasse une valeur maximale prédéfinie, ou
- une augmentation dans le temps du flux MSP (I_{MSP}) dépasse une deuxième valeur seuil.

5. Procédé selon la revendication 1, **caractérisé en ce que** l'état de test est une phase de purge (Z₃) du module de débit (10) dans laquelle la pompe de refoulement (12) est ouverte, dans lequel il est décidé que le module de débit (10) doit passer à l'état de dégel si
- à l'intérieur d'un intervalle de temps prédéfini, au moins un nombre prédéfini de valeurs de mesure attendues du flux MSP (I_{MSP}) ne peut pas être détecté, ou
- au moins une valeur de mesure du flux MSP (I_{MSP}) se distingue de la valeur de mesure par au moins une première valeur seuil dans l'évolution dans le temps du flux MSP (I_{MSP}), ou
- au moins une valeur de mesure du flux MSP (I_{MSP}) dépasse une valeur maximale prédéfinie, ou
- une augmentation dans le temps du flux MSP (I_{MSP}) dépasse une deuxième valeur seuil, ou
- une augmentation dans le temps du flux MSP (I_{MSP}) ne dépasse pas une deuxième valeur seuil, mais aucun liquide n'est détecté dans un espace de travail (111) de la pompe de circulation (11).

6. Procédé selon la revendication 1, **caractérisé en ce que** l'état de test est une phase de montée en pression (Z₄) du module de débit (10) dans laquelle la pompe de refoulement (12) est fermée, dans lequel il est décidé que le module de débit (10) doit passer à l'état de dégel si
- à l'intérieur d'un intervalle de temps prédéfini, au moins un nombre prédéfini de valeurs de mesure attendues du flux MSP (I_{MSP}) ne peut pas être détecté, ou
- au moins une valeur de mesure du flux MSP (I_{MSP}) se distingue de la valeur de mesure par au moins une première valeur seuil dans l'évolution dans le temps du flux MSP (I_{MSP}) , ou
- au moins une valeur de mesure du flux MSP (I_{MSP}) dépasse une valeur maximale prédéfinie, ou
- une augmentation dans le temps du flux MSP (I_{MSP}) dépasse une deuxième valeur seuil.

7. Procédé selon la revendication 6, **caractérisé en ce que** la phase de montée en pression (Z₄) suit une phase d'assistance de mise en température pour le dispositif de transfert hydraulique (19), dans laquelle en même temps un mode chauffage et un mode débit de la pompe de circulation (11) sont effectués, et dans laquelle la pompe de refoulement (12) est ouverte.

8. Procédé selon la revendication 7, **caractérisé en ce que** la phase d'assistance de mise en température est un mode dégel auquel le module de débit (10) est passé après qu'il a été décidé dans la deuxième phase de test (Z₄) selon la revendication 4 que le module de débit (10) doit passer à un état de dégel.

9. Programme informatique qui est aménagé pour exécuter chaque étape du procédé selon l'une quelconque des revendications 1 à 8.

10. Support de stockage lisible par machine, sur lequel est stocké un programme informatique selon la revendication 9.

11. Appareil de commande électronique (40), qui est aménagé pour faire fonctionner un module de débit (10) d'un système de catalyseur SCR au moyen d'un procédé selon l'une quelconque des revendications 1 à 8.
